# EUROPEAN PATENT APPLICATION

(11) **EP 4 458 770 A1**
(43) Date of publication of application: **06.11.2024**
(21) Application number: 22912904.4
(22) Date of filing: 26.01.2022
(51) Int. Cl.: C01B 35/06

(54) **PREPARATION METHOD FOR ELECTRONICS-GRADE BORON TRICHLORIDE, AND BORON TRICHLORIDE OBTAINED THEREBY**

(30) Priority: 31.12.2021 CN 202111681448
(71) Applicant: DALIAN CREDITCHEM ELECTRONIC MATERICAL CO., LTD., Liaoning 116200 (CN)
(72) Inventor: ZHAO, Yi, Dalian, Liaoning 116200 (CN); LIU, Ying, Dalian, Liaoning 116200 (CN); ZHAO, Yinfeng, Dalian, Liaoning 116200 (CN); WU, Donghui, Dalian, Liaoning 116200 (CN); BI, Congzhi, Dalian, Liaoning 116200 (CN)
(74) Representative: Garavelli, Paolo
(86) International application number: PCT/CN2022/074050
(87) International publication number: WO 2023/123597

(57) **Abstract**

The present disclosure relates to the technical field of chemical separation, in particular to a preparation method of electronic-grade boron trichloride and the boron trichloride obtained by the same. Before the generation of the target product boron trichloride, firstly metal chlorides are generated by allowing metal impurities to react with chlorine, and since a reaction temperature of the metals and the chlorine is usually 350°C to 450°C, which is less than temperature at which the boron trichloride is generated by allowing boron carbideto react with the chlorine, two products can be generated separately under a temperature control condition. The generated metal chlorides have been vaporized at 400°C to 450°C, and are exhausted along with unreacted chlorine. After the metal impurities are removed, reaction between the boron carbide and the chlorine is performed, to generate the target product boron trichloride. According to the present disclosure, the metal chloride impurities can be deeply removed from the boron trichloride, and a removal rate reaches 95% or above. Other impurities are effectively removed through the combination of adsorption and rectification, and purity of the obtained boron trichloride reaches 99.999%, which meets 5N standards.

## Description

### TECHNICAL FIELD

The present disclosure relates to the technical field of chemical separation, in particular to a preparation method of electronic-grade boron trichloride and the boron trichloride obtained by the same.

### BACKGROUND ART

Electronic-grade high-purity boron trichloride is mainly used for a chemical vapor deposition (CVD) film forming process and a plasma dry etching process, with high technical requirements and great influence on a yield of circuits, in an integrated circuit (IC) manufacturing process, which will play a key role in improving the quality of IC products, and cannot be replaced with other electronic gases. At present, purity of the electronic-grade boron trichloride has to reach Grade 5N, that is, the purity has to be 99.999% or above. Since quality, properties, technical indexes and yield of ICs and electronic components are directly affected by impurity content and purity of the electronic-grade boron trichloride, the electronic-grade boron trichloride has extremely high requirements on impurities such as gas phases and metals.

There are two main production methods of boron trichloride, the first is to load boric acid on activated carbon to react with chlorine; and the second is to make boron carbide react with chlorine at high temperature. In the second preparation method, in addition to generating impurity gases such as oxygen, carbon dioxide, carbon monoxide, nitrogen and THC, impurities, namely metal chlorides, also exist. The metal chlorides are mainly generated by the reaction of metal impurities in the boron carbide and the chlorine. In addition to affecting the purity of the boron trichloride, the metal chlorides also block a production pipeline of the boron trichloride due to oily states thereof. Therefore, the removal of metal chloride impurities needs to be solved urgently.

Chinese patent application CN110117015A has disclosed a purification device and method of boron trichloride. Mainly, a process of adsorption, followed by filtration and rectification is adopted, a structure of a rectification tower is improved on this basis, and purification packing is added, so as to remove low-boiling-point impurities and chlorine impurities from the boron trichloride. The removal of the metal chloride impurities has not been proposed yet.

### TECHNICAL PROBLEM

Chinese patent application CN112312175A has disclosed a method of producing boron trichloride. Wherein, it has particularly disclosed that in order to remove metal chlorides, before the generation of the boron trichloride, the metal chlorides are generated by allowing metals to react with chlorine at 300°C to 700°C, and then the generated metal chlorides are removed by vaporization at high temperature. However, the method has some problems in actual application: since temperature at which the metal chlorides are generated is close to temperature at which the boron trichloride is generated, the boron trichloride is generated at a stage when the metal chlorides are generated, such that raw materials are wasted; and moreover, a small quantity of the metals are doped in boron carbide, which are difficult to remove, such that required standards are hardly met.

### TECHNICAL SOLUTION

The present disclosure aims at providing a preparation method of electronic-grade boron trichloride to overcome the above defects in existing removal of metal impurities.

The technical solution of the present disclosure is as follows:

A preparation method of electronic-grade boron trichloride, includes the following steps:
S-1, putting boron carbide in a sealed reactor, pressurizing the reactor with chlorine or mixed gas of chlorine and inert gas at 120°C to 180°C, and controlling pressure at 3 MPa to 5 MPa;
S-2, heating the reactor to 350°C to 450°C, and making the boron carbide raw material react with metals to generate metal chlorides;
S-3, controlling a temperature of the reactor at 400°C to 450°C, removing the gas from the reactor, and meanwhile inputting fresh chlorine;
S-4, heating the reactor to 500°C or above to generate boron trichloride through reaction; and
S-5, removing impurities, and collecting the boron trichloride.

In the above technical solution, before the generation of the target product boron trichloride, firstly the metal chlorides are generated by allowing metal impurities to react with the chlorine, and since a reaction temperature of the metals and the chlorine is usually 350°C to 450°C, which is less than temperature at which the boron trichloride is generated by allowing the boron carbide to react with the chlorine, two products can be generated separately under a temperature control condition. The generated metal chlorides have been vaporized at 400°C to 450°C, and are exhausted along with unreacted chlorine. After the metal impurities are removed, reaction between the boron carbide and the chlorine is performed, to generate the target product boron trichloride.

In the above technical solution, before the metals react with the chlorine, the boron carbide raw material is pre-pressurized at 120°C to 180°C firstly, so as to be activated. After the raw material is pre-treated to be activated, the metals and the chlorine tend to react to generate the metal chlorides after the temperature rises to 350°C to 450°C, which is conducive to sufficient reaction between the metals and the chlorine, thereby completely removing the metals. At this stage, side reactions for generating the boron trichloride by the boron carbide and the chlorine are inhibited, which are remarkably reduced.

In the above technical solution, all steps may be continuously performed, the temperature among the steps rises continuously, cooling in a previous step and heating in a next step are not needed, and therefore more energy is saved.

The boron carbide raw material mentioned above refers to a boron carbide raw material containing metal impurities. The metal impurities generally involved include iron, aluminium, silicon, etc. The generated metal chlorides include ferric chloride, aluminium chloride, silicon tetrachloride, etc.

As a preference of the above technical solution, the chlorine or the mixed gas of the chlorine and the inert gas in the step S-1 is introduced into the reactor after being pressurized, and more preferably, is input at pressure of 3MPa to 5 MPa.

As a preference of the above technical solution, the boron carbide is put in the reactor along with a flow of chlorine or a flow of the mixed gas of the chlorine and the inert gas.

As a preference of the above technical solution, an addition direction of the chlorine or the chlorine and the inert gas is opposite to an addition direction of the boron carbide.

As a preference of the above technical solution, in the step S-1, pressurization time is 0.5 hours to 1 hour.

As a preference of the above technical solution, in the step S-4, the temperature of the reactor is controlled at 500°C to 1000°C.

More preferably, in the step S-4, the temperature rises to a target temperature at a rate of 6°C to 8°C per minute.

As a preference of the above technical solution, an inner wall of the reactor is treated, that is, coated with a protective coating.

As a preference of the above technical solution, the protective coating includes quartz, ceramic and diatomite, and a particle size of the quartz is greater than particle sizes of the ceramic and the diatomite.

Wherein, the particle size of the quartz is controlled at 200 meshes to 400 meshes, and the particle sizes of the ceramic and the diatomite are controlled at 500 meshes to 850 meshes.

The quartz, the ceramic and the diatomite all belong to high-temperature-resistant materials, all can resist temperature of 1400°C or above, and can stably exist as the coating of the above reactor.

The particle size of each component, especially the particle size of the quartz powder is specifically limited in the protective coating of the present disclosure. Roughness appears on a surface of the formed coating, and the rough structure on the surface is conducive to attachment of the powdery boron carbide raw material, dispersion of the boron carbide raw material and the occurrence of reaction.

In addition, after the protective coating of the present disclosure is adopted, service life of the reactor is further prolonged, for the reason that local accumulation of the boron carbide is reduced due to the adoption of the coating of the present disclosure, and too high local temperature of the reactor may be caused by local accumulation of the boron carbide, resulting in local damage to the reactor.

A forming method of the coating of the present disclosure is not limited, and the coating may be prepared through supersonic plasma spraying. The supersonic plasma spraying has the characteristics of high temperature of flame flow and high jet speed, so as to prepare the coating with high quality by the powder materials.

More preferably, the protective coating includes the components in part by weight: 1 part of quartz, 0.3-0.4 parts of ceramic and 0.1-0.3 parts of diatomite.

The present disclosure further provides electronic-grade boron trichloride obtained by the above method. Content of ferric chloride in the electronic-grade boron trichloride does not go beyond 42 ppb, content of aluminium does not go beyond 8 ppb, and content of silicon does not go beyond 12 ppb.

### BENEFICIAL EFFECTS

Compared with the prior art, by implementing the above technical solution, the present disclosure specifically has the following beneficial effects:

According to the present disclosure, the metal chloride impurities can be deeply removed from the boron trichloride, and a removal rate reaches 95% or above.

According to the present disclosure, in a process of removing the metal chlorides, a generation amount of the boron trichloride is small, such that unnecessary raw material waste is reduced.

According to the present disclosure, during removal of the metal chlorides, other impurities are effectively removed through the combination of adsorption and rectification, and purity of the obtained boron trichloride reaches 99.999%, which meets 5N standards.

### DETAILED DESCRIPTION OF THE PRESENT DISCLOSURE

The present disclosure will be described in detail below with reference to specific embodiments. It should be understood that the embodiments of the present disclosure are merely used for illustrating the present disclosure, rather than limiting it, and various changes or improvements made to the implementation according to ordinary technical knowledge and conventional methods in the art without departing from the technical thought of the present disclosure shall fall within the scope of the present disclosure.

In a method of generating boron trichloride by reaction between boron carbide and chlorine, the boron carbide (a boron carbide raw material mentioned above and below) used as a raw material contains impurity metals such as iron (Fe), aluminium (Al) and silicon (Si), content of the iron is the maximum among the impurities, and the iron is considered as derived from a ball mill used when producing (crushing) the boron carbide.

Boron carbide powder with D95 of 55 µm as measured through a laser diffraction method is used as powder of the boron carbide raw material.

Under the condition that the boron carbide contains these metals, the metals are also chlorinated at the time of chlorination reaction in which boron trichloride is generated, to generate metal chlorides as byproduct impurities, such as ferric chloride (III) (FeCl₃), aluminium chloride (AlCl₃) and silicon tetrachloride (SiCl₄). Due to the existence of the metal chlorides, purification of the boron trichloride is disturbed, moreover, the metal chlorides are dark brown oil-like product, which are precipitated at cooling points on a pipeline of producing the boron trichloride, easily resulting in blockage of the production pipeline.

The reactor of the present disclosure may be any high-temperature-resistant reactor, and preferably a high-temperature-resistant quartz reactor.

The chlorine in the embodiment is commercially-available high-purity chlorine with purity of 99.999 vol% and water content of 0.9 vol ppm.

Varieties of the inert gas capable of being used in the mixed gas are not specifically limited, and the inert gas may be nitrogen, argon, helium, etc. As gas containing the chlorine, used in a metal chlorination process, the mixed gas of the chlorine and the inert gas that consists of 70 vol% to 100 vol% of chlorine and the balance of inert gas may be used, or 100 vol% of chlorine not containing the inert gas may also be used.

### Embodiment 1

The embodiment provides a preparation method of electronic-grade boron trichloride, which is mainly used for removing metal chlorides of the boron trichloride. The preparation method specifically includes the following steps:
S-1, a powdery boron carbide raw material is put in a sealed reactor under a chlorine flow, the reactor is heated to 150°C +/-5°C, chlorine is introduced, the reactor is pressurized, and pressure is kept at 5 MPa for 1 hour; wherein a tubular reaction container made of quartz is selected as the reactor.
S-2, the reactor is directly heated to 400°C+/-5°C after reaching the time of the step S-1, at this moment, the boron carbide raw material reacts with metals to generate metal chlorides, the reaction between the boron carbide and the chlorine is inhibited at the temperature, and the reaction does not occur basically, which is more conducive to generation of the metal chlorides.
S-3, temperature of the reactor is controlled at 480°C+/-5°C, the gas in the reactor is exhausted, and meanwhile fresh chlorine is input. Since the metal chlorides generated in the step S-2 can be vaporized at low temperature, the vaporized metal chlorides are separated from the reactor. The metal chlorides are completely removed in this step.
S-4, the reactor is heated to 900°C at a rate of 6°C per minute, and at this moment, the boron carbide reacts with the chlorine in the reactor, to generate the boron trichloride.
S-5, impurities other than the metal chlorides are removed through adsorption and rectification, wherein the impurities other than the metal chlorides include oxygen, carbon dioxide, carbon monoxide, nitrogen, THC, etc., adsorption and rectification methods are not limited, an adsorption tank and a rectification tower in the prior art are adopted, and a 3A zeolite molecular sieve is adopted as an adsorption medium. Temperature of a tower kettle of the rectification tower is controlled at 50°C, temperature of an overhead condenser is controlled at -80°C, operating pressure of the rectification tower is controlled at 1.0 MPa, the boron trichloride that has been collected to the tower kettle is rectified and purified, and trace air and hydrogen chloride impurities are removed, to obtain a high-purity boron trichloride product; and

The purified high-purity boron trichloride is introduced into a product collection tank through an overhead product outlet for collection.

In addition, tail gas is further treated, and the tail gas exhausted after rectification and purification is absorbed and treated through soda lime and activated carbon in a tail gas treatment device, which can be exhausted after reaching standards followed by treatment.

In the generation reaction of the boron trichloride, colored dirt considered as the metal chlorides is not observed on a production pipeline of a boron trichloride production device, and the production pipeline of the boron trichloride production device is not blocked, either.

The generated boron trichloride is subjected to inductively coupled plasma emission spectrometric analysis. It is shown from results that content of iron in the generated boron trichloride is 35 ppb, content of aluminium is 8 ppb, and content of silicon is 12 ppb. Purity of the boron trichloride prepared in the embodiment is greater than or equal to 99.999%.

### Embodiment 2

The embodiment provides a preparation method of electronic-grade boron trichloride, which is mainly used for removing metal chlorides of the boron trichloride. The preparation method specifically includes the following steps:
S-1, a powdery boron carbide raw material is put in a sealed reactor under a flow of mixed gas (70 vol% of chlorine + 30 vol% of nitrogen), the reactor is heated to 170°C +/-5°C, the mixed gas at the above ratio is introduced in a direction opposite to a feeding direction of the boron carbide raw material, and pressure of the reactor is kept at 3.5 MPa for 0.5 hours; wherein a tubular reaction container made of quartz is selected as the reactor.
S-2, the reactor is directly heated to 360°C+/-5°C after reaching the time of the step S-1, at this moment, the boron carbide raw material reacts with metals to generate metal chlorides, the reaction between the boron carbide and the chlorine is inhibited at the temperature, and the reaction does not occur basically, which is more conducive to generation of the metal chlorides.
S-3, temperature of the reactor is controlled at 450°C, the gas in the reactor is exhausted, and meanwhile fresh chlorine is input. Since the metal chlorides generated in the step S-2 can be vaporized at low temperature, the vaporized metal chlorides are separated from the reactor. The metal chlorides are completely removed in this step.
S-4, the reactor is heated to 900°C±5°C at a rate of 8°C per minute, at this moment, the boron carbide reacts with the chlorine in the reactor, to generate the boron trichloride, and the reaction is performed in a barometric pressure environment.
S-5, impurities other than the metal chlorides are removed through adsorption and rectification, wherein the impurities other than the metal chlorides include oxygen, carbon dioxide, carbon monoxide, nitrogen, THC, etc., adsorption and rectification methods are not limited, an adsorption tank and a rectification tower in the prior art are adopted, and a 3A zeolite molecular sieve is adopted as an adsorption medium; and temperature of a tower kettle of the rectification tower is controlled at 25°C, temperature of an overhead condenser is controlled at -80°C, operating pressure of the rectification tower is controlled at 2.0 MPa, the boron trichloride that has been collected to the tower kettle is rectified and purified, and trace air and hydrogen chloride impurities are removed, to obtain a high-purity boron trichloride product.

The purified high-purity boron trichloride is introduced into a product collection tank through an overhead product outlet for collection.

In addition, tail gas is further treated, and the tail gas exhausted after rectification and purification is absorbed and treated through soda lime and activated carbon in a tail gas treatment device, which can be exhausted after reaching standards followed by treatment.

In the generation reaction of the boron trichloride, colored dirt considered as the metal chlorides is not observed on a production pipeline of a boron trichloride production device, and the production pipeline of the boron trichloride production device is not blocked, either.

The generated boron trichloride is subjected to inductively coupled plasma emission spectrometric analysis. It is shown from results that content of iron in the generated boron trichloride is 42 ppb, content of aluminium is 7 ppb, and content of silicon is 10 ppb. Purity of the boron trichloride prepared in the embodiment is greater than or equal to 99.999%.

### Embodiment 3

The embodiment provides a preparation method of electronic-grade boron trichloride, which is mainly used for removing metal chlorides of the boron trichloride. The preparation method specifically includes the following steps:
S-1, a powdery boron carbide raw material is put in a sealed reactor under a chlorine flow, the reactor is heated to 130°C +/-5°C, the reactor is pressurized by chlorine, and pressure is kept at 3.5 MPa for 50 minutes; wherein a tubular reaction container made of quartz is selected as the reactor.
S-2, the reactor is directly heated to 360°C+/-5°C, at this moment, the boron carbide raw material reacts with metals to generate metal chlorides, the reaction between the boron carbide and the chlorine is inhibited at the temperature, and the reaction does not occur basically, which is more conducive to generation of the metal chlorides.
S-3, temperature of the reactor is controlled at 420°C+/-5°C, the gas in the reactor is exhausted, and meanwhile fresh chlorine is input. Since the metal chlorides generated in the step S-2 can be vaporized at low temperature, the vaporized metal chlorides are separated from the reactor. The metal chlorides are completely removed in this step.
S-4, the reactor is heated to 850°C, at this moment, the boron carbide reacts with the chlorine in the reactor, to generate the boron trichloride, and the reaction is performed in a barometric pressure environment.
S-5, impurities other than the metal chlorides are removed through adsorption and rectification, wherein the impurities other than the metal chlorides include oxygen, carbon dioxide, carbon monoxide, nitrogen, THC, etc., adsorption and rectification methods are not limited, an adsorption tank and a rectification tower in the prior art are adopted, and a 3A zeolite molecular sieve is adopted as an adsorption medium. Temperature of a tower kettle of the rectification tower is controlled at 40°C, temperature of an overhead condenser is controlled at -80°C, operating pressure of the rectification tower is controlled at 1.5 MPa, the boron trichloride that has been collected to the tower kettle is rectified and purified, and trace air and hydrogen chloride impurities are removed, to obtain a high-purity boron trichloride product; and

The purified high-purity boron trichloride is introduced into a product collection tank through an overhead product outlet for collection.

In addition, tail gas is further treated, and the tail gas exhausted after rectification and purification is absorbed and treated through soda lime and activated carbon in a tail gas treatment device, which can be exhausted after reaching standards followed by treatment.

In the embodiment, an inner wall of the reactor is treated, that is, is coated with a protective coating. The protective coating includes the components in part by weight: 10 parts of quartz, 3 parts of ceramic and 1 part of diatomite, a particle size of the quartz is controlled at 200 meshes to 400 meshes, and particle sizes of the ceramic and the diatomite are controlled at 500 meshes to 850 meshes.

The coating of the present disclosure is prepared through supersonic plasma spraying, and a thickness of the formed coating is 650 µm.

In the generation reaction of the boron trichloride, colored dirt considered as the metal chlorides is not observed on a production pipeline of a boron trichloride production device, and the production pipeline of the boron trichloride production device is not blocked, either.

The generated boron trichloride is subjected to inductively coupled plasma emission spectrometric analysis. It is shown from results that content of iron in the generated boron trichloride is 25 ppb, content of aluminium is 2 ppb, and content of silicon is 6 ppb. Purity of the boron trichloride prepared in the embodiment is greater than or equal to 99.999%.

### Embodiment 4

The embodiment differs from Embodiment 3 in that the composition of the protective coating gets changed, that is, the protective coating includes the components in part by weight: 10 parts of quartz, 4 parts of ceramic and 2 parts of diatomite, a particle size of the quartz is controlled at 200 meshes to 400 meshes, and particle sizes of the ceramic and the diatomite are controlled at 500 meshes to 850 meshes.

In the generation reaction of the boron trichloride, colored dirt considered as the metal chlorides is not observed on a production pipeline of a boron trichloride production device, and the production pipeline of the boron trichloride production device is not blocked, either.

The generated boron trichloride is subjected to inductively coupled plasma emission spectrometric analysis. It is shown from results that content of iron in the generated boron trichloride is 23 ppb, content of aluminium is 4 ppb, and content of silicon is 8 ppb. Purity of the boron trichloride prepared in the embodiment is greater than or equal to 99.999%.

### Comparative Example 1

The embodiment provides a preparation method of electronic-grade boron trichloride, which is mainly used for removing metal chlorides of the boron trichloride. The preparation method specifically includes the following steps:
S-1, a powdery boron carbide raw material is put in a sealed reactor under a chlorine flow, chlorine is introduced, the reactor is heated to 400°C+/-5°C, at this moment, the boron carbide raw material reacts with metals to generate metal chlorides, the reaction between the boron carbide and the chlorine is inhibited at the temperature, and the reaction does not occur basically, which is more conducive to generation of the metal chlorides.
S-2, temperature of the reactor is controlled at 480°C+/-5°C, the gas in the reactor is exhausted, and meanwhile fresh chlorine is input. Since the metal chlorides generated in the step S-1 can be vaporized at low temperature, the vaporized metal chlorides are separated from the reactor. The metal chlorides are completely removed in this step.
S-3, the reactor is heated to 900°C at a rate of 6°C per minute, and at this moment, the boron carbide reacts with the chlorine in the reactor, to generate the boron trichloride.
S-4, impurities other than the metal chlorides are removed through adsorption and rectification, wherein the impurities other than the metal chlorides include oxygen, carbon dioxide, carbon monoxide, nitrogen, THC, etc., adsorption and rectification methods are not limited, an adsorption tank and a rectification tower in the prior art are adopted, and a 3A zeolite molecular sieve is adopted as an adsorption medium. Temperature of a tower kettle of the rectification tower is controlled at 50°C, temperature of an overhead condenser is controlled at -80°C, operating pressure of the rectification tower is controlled at 1.0 MPa, the boron trichloride that has been collected to the tower kettle is rectified and purified, and trace air and hydrogen chloride impurities are removed, to obtain a high-purity boron trichloride product; and

The purified high-purity boron trichloride is introduced into a product collection tank through an overhead product outlet for collection.

In addition, tail gas is further treated, and the tail gas exhausted after rectification and purification is absorbed and treated through soda lime and activated carbon in a tail gas treatment device, which can be exhausted after reaching standards followed by treatment.

In the generation reaction of the boron trichloride, a little colored dirt is observed on a production pipeline of a boron trichloride production device, and the production pipeline is not blocked.

The generated boron trichloride is subjected to inductively coupled plasma emission spectrometric analysis. It is shown from results that content of iron in the generated boron trichloride is 246 ppb, content of aluminium is 58 ppb, and content of silicon is 66 ppb. Purity of the boron trichloride prepared in Comparative Example 1 is greater than or equal to 99.99%.

Comparative Example 1 differs from Embodiment 1 in operation of step S-1. Content of the metals in the obtained boron trichloride is remarkably greater than corresponding content in the boron trichloride obtained in Embodiment 1. Finally, purity of the boron trichloride can only reach Grade 4N.

### Comparative Example 2:

Comparative Example 2 differs from Embodiment 1 in that the temperature in the step S-1 in Embodiment 1 is adjusted to 300°C. The temperature is closer to the metal chlorination temperature in the step S-2. However, the temperature is not conducive to activation of the raw material, in the generation reaction of the boron trichloride, a little colored dirt is observed on a production pipeline of a boron trichloride production device at the temperature, and the production pipeline is not blocked.

The generated boron trichloride is subjected to inductively coupled plasma emission spectrometric analysis. It is shown from results that content of iron in the generated boron trichloride is 186 ppb, content of aluminium is 32 ppb, and content of silicon is 47 ppb. Purity of the boron trichloride prepared in Comparative Example 2 is greater than or equal to 99.99%.

Content of the metals in the obtained boron trichloride is greater than corresponding content in the boron trichloride obtained in Embodiment 1. Finally, purity of the boron trichloride can only reach Grade 4N.

### Comparative Example 3:

Comparative Example 3 differs from Embodiment 1 in that the pressure in the step S-1 in Embodiment 1 is controlled at barometric pressure. In the generation reaction of the boron trichloride, a little colored dirt is observed on a production pipeline of a boron trichloride production device at the pressure, and the production pipeline is not blocked.

The generated boron trichloride is subjected to inductively coupled plasma emission spectrometric analysis. It is shown from results that content of iron in the generated boron trichloride is 260 ppb, content of aluminium is 45 ppb, and content of silicon is 55 ppb. Purity of the boron trichloride prepared in Comparative Example 3 is greater than or equal to 99.99%.

Content of the metals in the obtained boron trichloride is greater than corresponding content in the boron trichloride obtained in Embodiment 1. Finally, purity of the boron trichloride can only reach Grade 4N. It is shown from data of Comparative Example 1 and Comparative Example 2 that the influence of the pressure in the step S-1 on results is more obvious than the influence of the temperature on the results.

### Comparative Example 4:

The embodiment provides a preparation method of electronic-grade boron trichloride, specifically including the following steps:
S-1, A powdery boron carbide raw material is put in a sealed reactor under a chlorine flow, the reactor is heated to 900°C at a rate of 6°C per minute, and at this moment, the boron carbide reacts with the chlorine in the reactor, to generate the boron trichloride.
S-2, oxygen, carbon dioxide, carbon monoxide, nitrogen, THC and other impurities are removed through adsorption and rectification, adsorption and rectification methods are not limited, an adsorption tank and a rectification tower in the prior art are adopted, and a 3A zeolite molecular sieve is adopted as an adsorption medium. Temperature of a tower kettle of the rectification tower is controlled at 50°C, temperature of an overhead condenser is controlled at -40°C, operating pressure of the rectification tower is controlled at 1.0 MPa, the boron trichloride that has been collected to the tower kettle is rectified and purified, and trace air and hydrogen chloride impurities are removed, to obtain a high-purity boron trichloride product; and

The purified high-purity boron trichloride is introduced into a product collection tank through an overhead product outlet for collection.

In addition, tail gas is further treated, and the tail gas exhausted after rectification and purification is absorbed and treated through soda lime and activated carbon in a tail gas treatment device, which can be exhausted after reaching standards followed by treatment.

Comparative Example 4 differs from Embodiment 1 in that no production and removal processes of metal chlorides are performed.

Accumulation of colored dirt is observed on a production pipeline of a boron trichloride production device, and the production pipeline is blocked.

The generated boron trichloride is subjected to inductively coupled plasma emission spectrometric analysis. It is shown from results that content of iron in the generated boron trichloride is 845 ppb, content of aluminium is 162 ppb, and content of silicon is 256 ppb. Purity of the boron trichloride prepared in Comparative Example 4 is greater than or equal to 99.9%.

Content of the metals in the obtained boron trichloride is greater than corresponding content in the boron trichloride obtained in Embodiment 1. Finally, purity of the boron trichloride can only reach Grade 3N.

## Claims

1. A preparation method of electronic-grade boron trichloride, **characterized by** comprising the following steps:
S-1, putting boron carbide in a sealed reactor, pressurizing the reactor with chlorine or mixed gas of chlorine and inert gas at 120°C to 180°C, and controlling pressure at 3 MPa to 5 MPa;
S-2, heating the reactor to 350°C to 450°C, and making the boron carbide raw material react with metals to generate metal chlorides;
S-3, controlling a temperature of the reactor at 400°C to 450°C, removing the gas from the reactor, and meanwhile inputting chlorine;
S-4, heating the reactor to 500°C or above to generate boron trichloride through reaction; and
S-5, removing impurities, and collecting the boron trichloride.

2. Claim 2 is input here. The preparation method of the electronic-grade boron trichloride according to claim 1, **characterized in that** the chlorine or the mixed gas of the chlorine and the inert gas in the step S-1 is introduced into the reactor after being pressurized.

3. The preparation method of the electronic-grade boron trichloride according to claim 1, **characterized in that** the boron carbide is put in the reactor along with a flow of chlorine or a flow of the mixed gas of the chlorine and the inert gas.

4. The preparation method of the electronic-grade boron trichloride according to claim 1, **characterized in that** in the step S-1, pressurization time is 0.5 hours to 1 hour.

5. The preparation method of the electronic-grade boron trichloride according to claim 1, **characterized in that** in the step S-4, the temperature of the reactor is controlled at 500°C to 1000°C.

6. The preparation method of the electronic-grade boron trichloride according to claim 5, **characterized in that** in the step S-4, the temperature rises to a target temperature at a rate of 6°C to 8°C per minute.

7. The preparation method of the electronic-grade boron trichloride according to claim 1, **characterized in that** an inner wall of the reactor is coated with a protective coating, the protective coating comprises quartz, ceramic and diatomite, and a particle size of the diatomite is greater than particle sizes of the ceramic and the diatomite.

8. The preparation method of the electronic-grade boron trichloride according to claim 7, **characterized in that** the particle size of the quartz is controlled at 200 meshes to 400 meshes, and the particle sizes of the ceramic and the diatomite are controlled at 500 meshes to 850 meshes.

9. The preparation method of the electronic-grade boron trichloride according to claim 7, **characterized in that** the protective coating comprises the components in part by weight: 1 part of quartz, 0.3-0.4 parts of ceramic and 0.1-0.3 parts of diatomite.

10. Electronic-grade boron trichloride obtained by the preparation method according to any one of claims 1-9, **characterized in that** content of ferric chloride in the boron trichloride does not go beyond 42 ppb, content of aluminium does not go beyond 8 ppb, and content of silicon does not go beyond 12 ppb.
